# EUROPEAN PATENT APPLICATION

(11) **EP 1 519 299 A1**
(43) Date of publication of application: **30.03.2005**
(21) Application number: 03292386.4
(22) Date of filing: 29.09.2003
(51) Int. Cl.: G06K 9/00

(54) **Method, system, client, server and computer software product for distributed handwriting recognition**

(71) Applicant: ALCATEL, 75008 Paris (FR)
(72) Inventor: Rössler, Horst, 70794 Filderstadt (DE); Hoche, Michael Walter, Dr., 71701 Schwieberdingen (DE)
(74) Representative: Brose, Gerhard

(57) **Abstract**

The present invention relates to a method for a communication dialog when recognizing handwriting between a capturing device (HWSC+) at a client (C) and a recognizer unit (HWRE+) at a server (S), the server (S) and the client (C) being connected via a network, the method comprising the step of translating the captured handwriting into a digital transfer format for captured handwriting and handwriting recognizing, hereafter called digital ink (HWPRP), at the client (C) terminal, delivering the digital ink to the server (S), and when the digital ink is recognized by the recognizer unit at the server (S), delivering the recognition result back to the client (C), comprising the further steps of initializing a recognizing session and configuring a context of said handwriting recognizer unit (HWRE+) by an instruction in the digital ink (HWPRP) exchanged via said network, requesting (RReq1, RReq2) recognizing the digital ink part by part, and replying (RRes1, RRes2)a partial recognition result when the recognizer unit has recognized one or a sum of said parts until the digital ink is recognized or the process is interrupted. The invention further relates to a handwriting recognition system, a handwriting recognition client, a handwriting recognition server (S), and a computer software product.

## Description

The present invention relates to a method for recognizing handwriting at a client involving a handwriting recognizer unit at a server. The invention further relates to a handwriting recognition system, a handwriting recognition client, a handwriting recognition server, and a computer software product.

Pervasive computing can be defined as access to information and software applications anytime and anywhere. This form of computing is highly dynamic and disaggregated. Users are mobile and services are provided by collections of distributed components collaborating together. Recent advances in mobile computing, service discovery, and distributed computing are key technologies to support pervasive computing.

Pervasive computing aims at availability and invisibility. On the one hand, pervasive computing can be defined as availability of software applications and information anywhere and anytime. On the other hand, pervasive computing also means that computers are hidden in numerous so-called information appliances which we use in our day-to-day life. Personal Digital Assistants (PDAs) and cell phones are the first widely available and used pervasive computing devices.

Pervasive computing aims at non-intrusiveness. It contrasts with the actual non-transparency of current interactions with computers. Neither input-output devices nor user manipulations are natural. Input-output devices such as mouses, keyboards, and monitors are pure artifacts of computing.

So are manipulations such as launching a browser, selecting elements in a Web page, setting up an audio or video encoding mechanism, and entering authentication information (e.g., a login and a password). To achieve transparency of interaction, advanced hardware and software tools are needed such as handwriting recognition, gesture recognition, speech recognition, free-form pen interaction, and tangible user interfaces, i.e. electronic information is manipulated using day to day physical objects.

A technology for that is for instance the Open Agent Architecture (OAA), developed at the Stanford Research Institute. It enables for software services to be provided through the co-operative efforts of distributed collections of autonomous agents. Communication and cooperation between agents are brokered by one or more facilitators, which are responsible for matching requests, from users and agents, with descriptions of the capabilities of other agents.

The evolution of models for the design and construction of software systems is being driven forward by several closely interrelated trends: The adoption of a networked computing model is leading to a greatly increased reliance on distributed sites for both data and processing resources.

More than ever before, the increasing complexity of systems, the development of new technologies, and the availability of multimedia material and environments are creating a demand for more accessible, more intuitive user interfaces. Autonomous, distributed, multi-component systems providing sophisticated services will no longer lend themselves to the familiar direct manipulation model of interaction, in which an individual user masters a fixed selection of commands provided by a single application. Ubiquitous computing, in networked environments, has brought about a situation in which the typical user of many software services is likely to be a non-expert, who may access a given service infrequently or only a few times. Accommodating such usage patterns calls for new approaches. Fortunately, input modalities now becoming widely available, such as speech recognition and pen-based handwriting and gesture recognition, and the ability to manage the presentation of systems' responses by using multiple media provide an opportunity to fashion a style of human-computer interaction that draws much more heavily on our experience with human-human interactions.

With speech recognition, handwriting recognition, and natural language technologies becoming more mature, an agent architecture must be prepared for these forms of input to play an increased role in the tasking of agent communities.

A user interface (UI) agent runs on the user's local mobile device and is responsible for accepting user input, sending requests to the facilitator for delegation to appropriate agents, and displaying the results of the distributed computation. The user may interact directly with a remote application by clicking on active areas in the interface, calling up a form or window for that application, and making queries with standard interface dialog mechanisms.

Such a system supporting pen-based input and diagram recognition that employs a personal digital assistant (PDA) as an intelligent input device for the system is known from the paper "Distributed Architectures for Pen-Based Input and Diagram Recognition" of W.V. Citrin and M.D. Gross, ACM Conference on Advanced Visual Interfaces 1996. There, functionality is distributed between the PDA and a main computer, with the PDA performing low-level shape recognition and editing functions, and the back-end computer performing high-level recognition functions, including recognition of spatial relations between picture elements. This organization provides a number of advantages over conventional pen-based systems employing simple digitizing tablets. It provides the opportunity to use hardware specially designed for shape recognition and editing in a general diagram recognition system, it allows for improved performance through parallel processing, and it allows diagram entry to be performed remotely through use of the PDA front end in the field.

At that point a communication dialog for distributed handwriting recognition enables mobile or remote end-user devices such as a mobile phone or PDAs (that may not have the computational resources) performing a satisfying handwriting recognition rate.

Handwriting recognition subsumes the whole recognition domain, e.g. from gesture recognition or writer recognition to string extraction and the semantic interpretation.

Digital ink refers to technology that digitally represents handwriting in its natural form, e.g. as traces on a plane. In a typical digital ink system, a digitizer is laid under or over an LCD screen capture the movement of a special-purpose pen, or stylus, and record the movement on the LCD screen. The effect is like writing on paper with liquid ink. The captured or recorded handwriting, i.e. the digital ink, can then be saved as handwriting or converted to typewritten text using handwriting recognition technology. The formalization of the exchange format describing the communication dialog content for distributed handwriting is called digital ink. The world wide web consortium has already started a set of requirements concerning an (digital) Ink Markup Language where central requirements are that
- it MUST provide a mechanism to reference external resources and constraints that are common across recognition-based input modalities.
- it MUST allow for the capture of a wide variety of different data channels according to the needs of the target engine or engine type, and it must allow for extension into new channel definitions to support future devices and applications.
- it MUST support multiple levels of granularity of ink streaming for real-time input.
- it MUST allow lightweight client implementations for thin mobile devices.
- it MUST provide a mechanism to allow for communications over low bandwidth network connections.

Within the context of digital ink a stroke is digital ink resulting from an elementary pen movement, such as bounded by two consecutive velocity extrema. Usually strokes are characterized also by starting with a pen-down event and ending with a pen-up event. A sequence of strokes constitutes a trace.

The problem that occurs when deploying distributed handwriting is that a communication dialog is required to be interactive (at least by a user), i.e. very short response cycles are expected. When the recognition service is distributed and e.g. burst over-loaded the "seamless recognition requirement" could not be met.

This problem is solved by a method for a communication dialog when recognizing handwriting between a capturing device at a client and a recognizer unit at a server, the server and the client being connected via a network, the method comprising the steps of translating the captured handwriting into a digital transfer format for captured handwriting and handwriting recognizing, hereafter called digital ink, at the client terminal, delivering the digital ink to the server, and when the digital ink is recognized by the recognizer unit at the server, delivering the recognition result back to the client, where further a recognizing session is initialized and a context of said handwriting recognizer unit is configured by an instruction in the digital ink exchanged via said network, and where iterative the steps of requesting (RReq1, RReq2) recognizing the digital ink part by part and replying (RRes1, RRes2)a partial recognition result when the recognizer unit has recognized one or a sum of said parts until the digital ink is recognized or the process is interrupted are performed.

And the problem is solved by a distributed handwriting recognizer system comprising at least one handwriting recognizer client and a handwriting recognizer server connected via a network, said handwriting recognizer client comprises input means for capturing handwriting input, processing means for translating the input into digital ink at the client terminal, and communication means for delivering the digital ink from the client to the server, said handwriting recognizer server comprises a recognizer unit for recognizing the digital ink at the server, and communication means for delivering the recognition result to the client, where the communication means are formed to establish a recognizing session and configuring a context of said handwriting recognizer unit by an instruction in the digital ink exchanged via said network, and the communication means are formed to handle a sequence of partial recognizing requests and to reply with the delivering of a sequence of partial recognition results until the digital ink is recognized or the process is interrupted.

The problem is solved, inter alia, by the handwriting recognizer client and the handwriting recognizer server.

Furthermore, the problem is solved by a computer software product for recognizing handwriting at a client involving a handwriting recognizer at a server, which upon execution performs the above method.

In other words: distributed (client/server) architecture for handwriting recognition solves the problem, suited to integrate in standard network environment, where the communication protocol exploiting context and characteristics of handwriting recognition, namely transferring partially digital ink and results between a client and a server and synchronizing the recognition context.

A distributed handwriting recognition systems consists of a client for processing the handwriting-input (pen) and a server, which processes the main part of the recognition algorithm. The client server communication provides the transfer of the digital ink (pen input) for recognition. This communication is preferred to be a domain specific extended markup language (XML), like InkXML controlling the recognizer's activities. An efficient and simple communication strategy uses the time (pause) between two strokes (pen up, pen down) to transfer the ink data to the recognition server and the interleaving of e.g. recognition activities at the server and e.g. scanning activities at the client. This method even works for different recognition modes, e.g. digits, cursive.

Accordingly, it is an advantage of the present invention to provide a high degree of scalability in terms of performance and number of clients, a high flexibility in terms of the partition of recognition requests and efforts, and a high recognition performance in terms of reactivity and load balancing.

By fragmenting scanned strokes within a session context burst loads are distributed over time and reactivity is drastically improved. By shifting functionality between server and client load balancing could take place according to the load context, e.g. in burst request phases.

Another advantage of the present invention is the provision of an ink recognition service, i.e. to make the functionality available for a large set of end-user network devices.

A further advantage of the present invention is the efficient communication strategy that requires low bandwidth and low scheduling effort yielding to impressive recognition capabilities.

Yet another advantage of the present invention is that it integrates well in a multimodal framework and the standardization of the world wide web consortium.

These and many other objects and advantages of the present invention will become apparent to those of ordinary skill in the art from a consideration of the drawings and ensuing description, where
**Figure 1** is a drawing of two handwriting inputs with illustrated sampling points
**Figure 2** is a drawing of a server client based handwriting recognizer communication according to prior art
**Figure 3** is a drawing of a method for recognizing handwriting at a client involving a handwriting recognizer unit at a server according to the invention
**Figure 4** is a schematic drawing of illustrating the load balancing by the method for recognizing handwriting at a client involving a handwriting recognizer unit at a server according to the invention
**Figure 5** and **Figure 6** are XML pieces of a digital ink

End-user device such as a mobile phone or PDA's may not have the computational power performing a satisfying handwriting recognition algorithm producing a high recognition rate. Therefore a distributed (client/server) architecture may be applied which provides a high degree of scalability and software flexibility.

A distributed handwriting recognition system consists of a client for processing the handwriting-input (Pen), called scanning, and a server which processes mainly the recognition.

The communication protocol between handwriting client and server may be based on IP/TCP and can be performed on any LAN or Internet-connection using e.g. socket connections etc.

The communication interface between the client and the server should provide the transfer of the digital ink (pen input) to the server for recognition.

An efficient and effective communication strategy supporting recognition request of partial inputs, preferably strokes, solves the problem of providing continues pen input and the reactive visual feedback during the communication and recognition process. This could be simply realized by re-using existing InkXML schemas that are glued together at the server such that the recognition algorithm is enabled to extract a partial result string from a set of partial digital ink input. This is usually the case when handling strokes as parts.

The communication protocol between handwriting client and server should also support load shifting in stress situations at the client or at the server in order to provide a smooth service (de-)gradation and load balancing. Load shifting could either be supported by functionality shifting like enhancing the preprocessing for the recognition at the client, e.g. digital ink polishing, reducing sampling rate etc. or even by transferring functionality, e.g. executable or interpretable programming code like Java classes or LISP code between server and client.

A simple and efficient communication strategy uses the time (pause) between two strokes (pen up, pen down) to transfer the ink data to the recognition server and the parallel processing of the activities at the client and the server. The suggested communication strategy works uniformly, i.e. independent of different recognition modes, e.g. digits, cursive etc. and ensures a reactive and continuous high recognition performance while using low communication bandwidth.

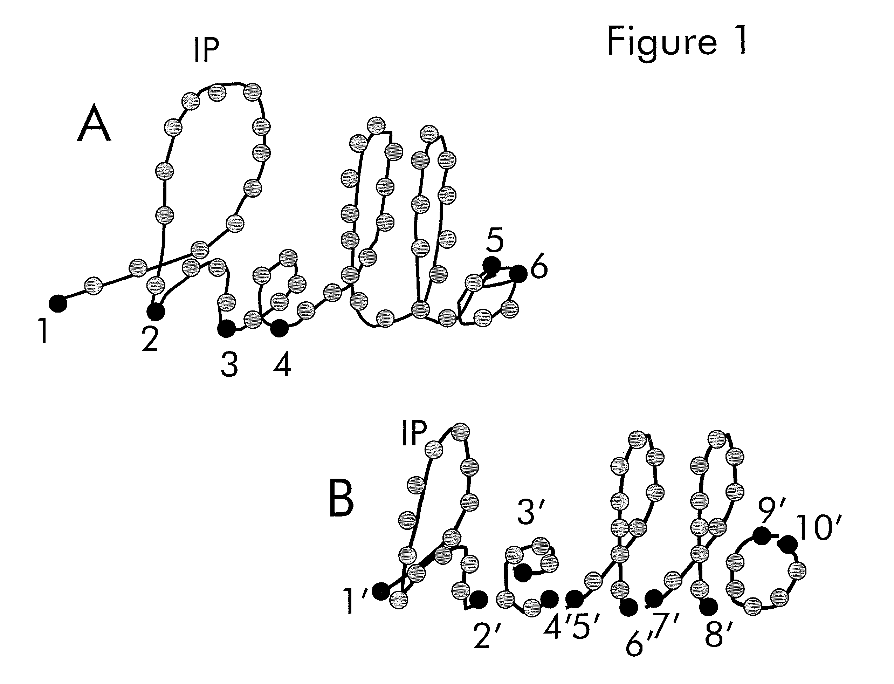

Figure 1 shows two handwritten "hello" samples A and B. The first "hello" sample A is sampled by a set of end sample points 1,2, ..., 6, and intermediate sample points IP. The second "hello" sample B is sampled by a set of end sample points 1',2', ..., 10', and also intermediate sample points IP.

The figure illustrates that handwriting is composed from strokes where a stroke could be characterized by its end points. These end points could be characterized either by a heavy change of the pen velocity trajectory as in the first "hello" sample or by a pen up event and pen down event as in the second "hello" sample.

In general the definition of a stroke is a part of a handwritten text. And the parts' granularity should be not below a letter. The parts should be comparable or concatenateable to the whole handwritten text in the sense of a string concatenation. The borders of the parts are the end points 1, 2, ..., 6, 1', 2', ..., 10'.

A handwritten text could be presented as digital ink using the sequence of sampling points. More generally handwritten text could be represented as a sequence of subsequences which could be concatenated to the whole sequence, i.e. a factorization in a semi-group (the algebraic term of the structure).

The handwriting could be also presented by a corresponding set of spine polynomial or any functional application. Even by pattern sequences of earlier recognized handwriting represented as an abstract entity like a token.

For the sake of simplicity and for illustration purposes the parts of the handwriting are considered as the usual plain sequence of sampling points although the method of the invention is not limited to this presentation.

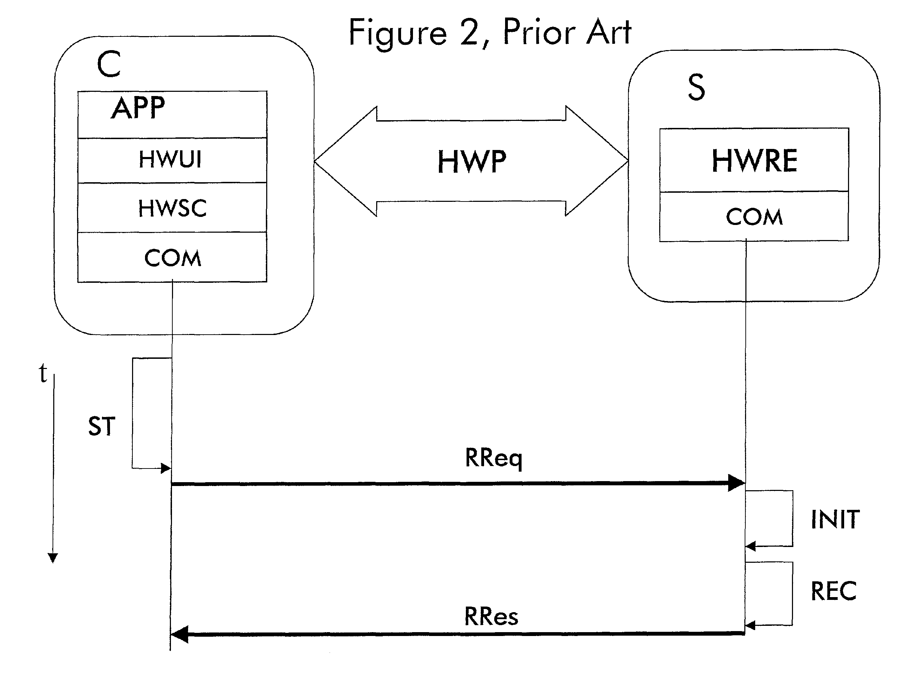

Figure 2 shows a distributed handwriting recognition system according to prior art comprising a client C and a server S communication via an handwriting presentation HWP, e.g. InkXML. The client comprises an application APP using an handwriting user interface HWUI that is supported by a handwriting scanner HWSC, that is connected via connection means COM to a server.

Furthermore an interaction sequence chart is shown illustrating a sampling text activity ST at the client C. At the server a recognizer initialization activity INIT and a recognizing activity REC is illustrated.

The recognition process is as follows at the client C the handwriting is sampled from the handwriting user interface HWUI by the handwriting scanner HWSC while the sampling text activity ST. Optionally the scanner also polishes the sample, e.g. by dropping superfluous sample points or calculating the above mentioned spine approximation, etc. Then a recognition request RReq (comprising the sampling information) is transferred to the server S. There, at the server S, the recognition request RReq is solved by first initializing the recognizer unit HWRE while the recognizer initialization activity INIT, and then recognizing the sampled handwriting while the recognizing activity REC. The result is transferred back to the client via a recognition result reply RRes. The direction of time is indicated in the diagram by the arrow labeled with t.

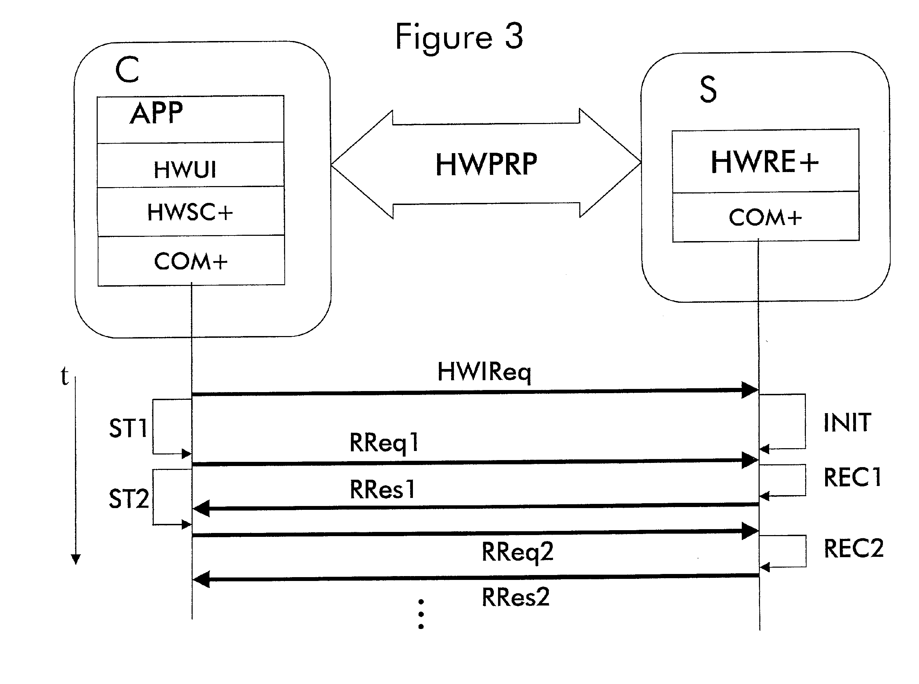

Figure 3 shows a distributed handwriting recognition system according to the invention also comprising also a client C and a server S now communicating via an handwriting presentation and recognizer presentation HWPRP, e.g. an XML schema like InkXML extended by tags describing the recognizer unit pre-conditions and post-conditions or even pragmatics, tasks, recognition domain models, or resources.

The client comprises an application APP using the handwriting user interface HWUI supporting an enhanced handwriting scanner HWSC+ that is connected via enhanced connection means COM+ to the server.

Furthermore an interaction sequence chart is shown comprising a first sampling text activity ST1 and a second sampling text activity ST2 at the client C. A recognizer initialization activity INIT and a first recognizing activity REC1 as well as a second recognizer activity REC2 at the server is also shown.

The recognition process is as follows: First when an handwriting recognition capability is necessary it is requested from the server using a handwriting recognizer initialization request HWIReq.

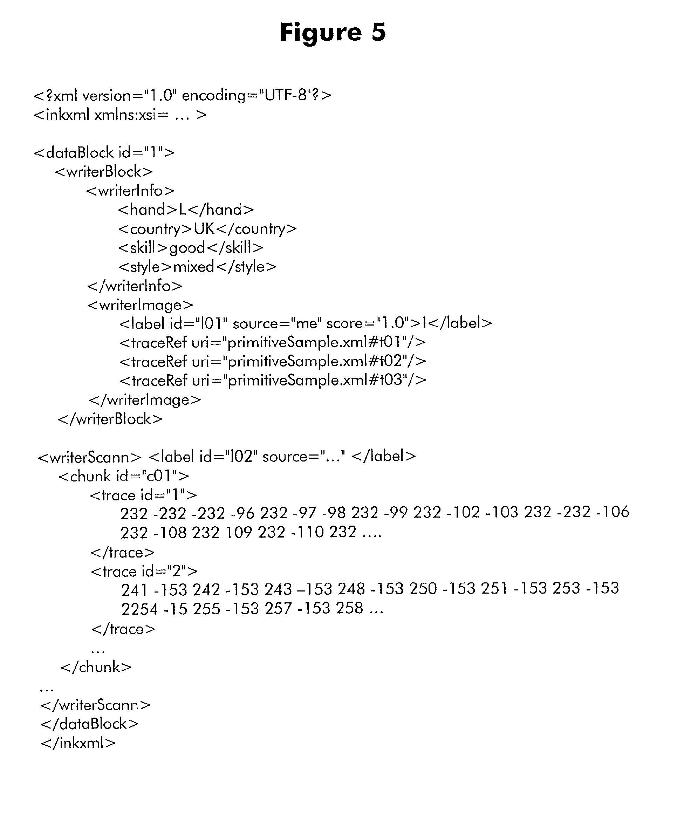

This request defines the context of the handwriting recognition. It prepares the server S e.g. by providing user information, recognition characteristics like language or even a recognition grammar e.g. limiting the recognition result space. A definition in InkXML of such an information is shown in figure 5. There the recognizer unit is prepared by writer information '<writerBlock>' and samples <writerlmage> in order to adapt the forthcoming recognition. Such a description could also comprise communication strategies, stroke and format definitions, and the granularity of a partial scan.

This request also spans a weak session context for the following recognition activities REC1 REC 2 as well for further requests. A session is a connection between a user agent or client and a server where information is exchanged between the two while handwriting scanning and recognition.

While the server is initializing, i.e. while the recognizer initialization activity INIT, the enhanced handwriting scanner HWSC+ samples in the sampling text activity ST1 a first stroke. This stroke is then transferred via the first recognition request RReq1 to the server S, where it is recognized while the first recognition activity REC1. While this first recognition activity REC1, the enhanced handwriting scanner HWSC+ continues with the second sampling text activity ST2. The second handwriting sample is then transferred via the second recognition request RReq2 to the server S, where it is recognized while the second recognition activity REC2 etc. When at the server S, a recognition request RReq1, RReq2 is solved by the recognizer unit while the corresponding recognizing activity REC1, REC2, the server replies with the result shown in the picture by a reply result Rres1 ...

A partial result is transferred back to the client via a recognition result reply RRes1, RRes2. The direction of time is also indicated in the diagram by the arrow labeled with t.

One could observe by comparing this diagram with that shown in figure 2 that the reactivity and efficiency is improved by the concurrent synchronized parallel processing at client and server side.

The enhanced connection means COM+ synchronizes the concatenations of strokes and recognition results. The diagram shows a very simple scenario. It should be noted that the could nearly an arbitrary interleaf (shuffle) of the requests and the responses or result replies. The invariants for the communication are only that STi is before STj if i<j, and that if there is no cashing or processing at the client side RReqi is before RReqj if i<j.

Thus the enhanced connection means COM+ has to buffer, delay, re-order requests and results in accordance to the system's context which includes required prefixes for recognition, aggregation of recognition result for a semantically validation etc..

This system context might be a client C running low on memory or processor capacity. Then the enhanced connection means COM+ at the server has to order the buffer and reorder for replying in the right order.

Another system context might be a server S running low on resources, especially on communication resources. Then an aggregation could be a solution, i.e. to integrate multiple strokes into an request or multiple results into an reply. Another approach could be enhancing the compression rate of the transmitted data, e.g. by applying run length coding or any other entropy reduction coding before delivering requests.

When the server S runs low on processing capacity the client C could take over some recognition functionality. This might be simply by buffering requests. Another enhancement is that the pre-processing is enhanced like in an compiler by an scanner or tokenizer. Even parts of the recognition algorithm could be transferred explicitly by using a mobile Java environment instead of the above indicated extensions of InkXML.

When for instance the recognizer unit and the scanner process is implemented in Java a whole segment (set of classes) of the recognizer unit could be transferred onto the client and executed in the client's virtual machine.

Recognition in a simple form could be assumed a Markov algorithm, i.e. there is a topology that allows a partial execution - piece by piece - and these pieces than could be sheaved together. Such a piece or part is a stroke or a single sign. A single sign could be for instance recognized by a trained neuronal network providing a distribution over the sign alphabet. Suppose for simplicity the maximum is used (no convolution or propagation). In a further step it is composed with the neighbor results and then modified according to semantically and syntactical restrictions like a limiting grammar or orthographic restriction etc. Each of these processes could be smoothly transferred from client to server and back in order to provide the recognition process performant.

From the above three scenarios one could further learn that the enhanced connection means COM+ has also to cope with the recognition algorithm topology constraints. E.g. when the recognizer unit comprises a spell checker the enhanced connection means COM+ has to delay responses and aggregate recognition content until the spell checking is done.

It is assumed to be straight forward applying standard scheduler techniques such that the invariants of the communication between the stated modules are suggested to solve the indicated synchronization problem in order to support an advantageous recognition while scanning scenario. Furthermore in order to establish a recognition context one might introduce explicitly session identifiers instead of client identifiers or addresses etc.

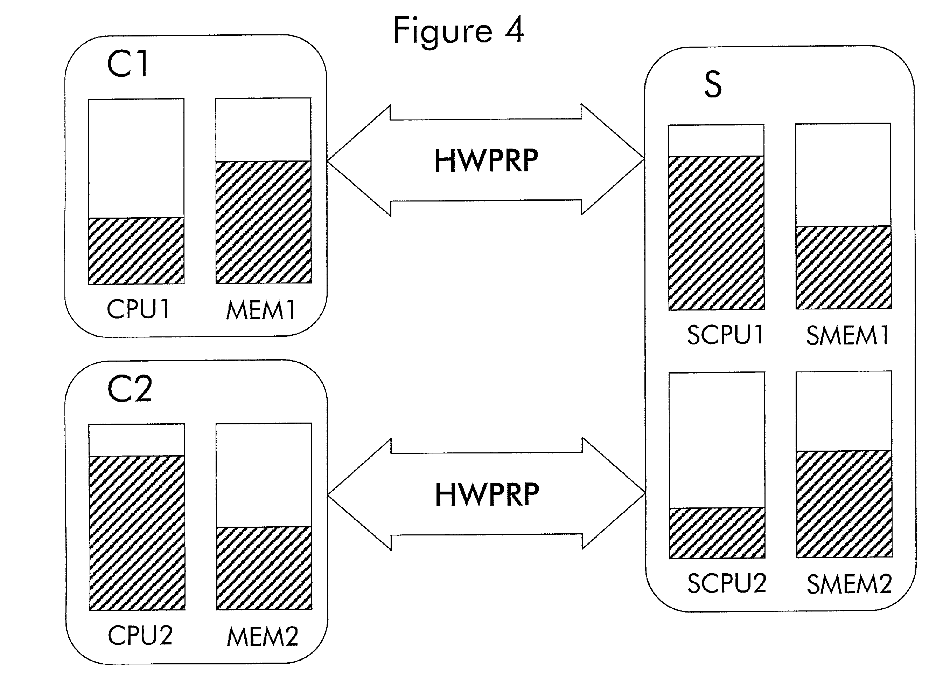

Figure 4 illustrates the client server resource balancing between the server S and two clients C1 and C2. While the first client C1 has processing resources CPU1 available it is running low on memory MEM1. The second client C2 has heavy load CPU2. The server S has to compensate these resource lacks and provides for the first client C1 more processing capacity SCPU1 than for the second client C2 is provided, SCPU2. Analogously memory is provided.

A word on memory. The used memory mainly comprises scanned patterns and a reference pattern set. Thus indeed memory is also important for performance since when recognizing at the client at least a part of the patterns are needed to be cashed at the client side. Here also standard cashing and paging mechanisms are available and applicable.

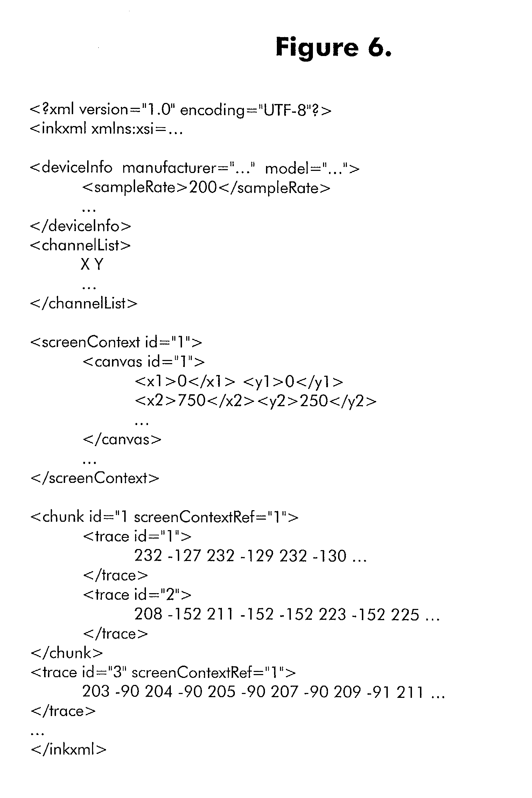

Figure 6 illustrates an example piece of InkXML digital ink, comprising scanning device information '<deviceInfo>' like sample rate, capabilities etc, and channel information '<channelLIST>' like the coordinates of position X Y or the angle of the pen, the pressure etc. Further it contains one chuck and two traces.

Applying the method according to the invention suggests to break down the shown digital ink represented in the chunk-trace-measurement structure into multiple parts, e.g. all comprising one trace.

The XML presentation of digital ink and the further information exchange enables to deploy the server as a web service in e.g. the Internet by applying e.g. Sun's Jini or Microsoft's Universal Plug and Play. The definition and background for such a programmatic interface is made available by World Wide Web consortium, w3c.org, and referred to as Web service.

## Claims

1. A method for a communication dialog when recognizing handwriting between a capturing device (HWSC+) at a client (C) and a recognizer unit (HWRE+) at a server (S), the server (S) and the client (C) being connected via a network, the method comprising the steps of
- translating the captured handwriting into a digital transfer format for captured handwriting and handwriting recognizing, hereafter called digital ink (HWPRP), at the client (C) terminal,
- delivering the digital ink to the server (S), and
- when the digital ink is recognized by the recognizer unit at the server (S), delivering the recognition result back to the client (C),
**characterized by** comprising the further steps of
- initializing a recognizing session and configuring a context of said handwriting recognizer unit (HWRE+) by an instruction in the digital ink (HWPRP) exchanged via said network,
- requesting (RReq1, RReq2) recognizing the digital ink part by part, and
- replying (RRes1, RRes2) a partial recognition result when the recognizer unit has recognized one or a sum of said parts
until the digital ink is recognized or the process is interrupted.

2. The method according to claim 1, **characterized by** comprising the further optional steps of
- buffering and delaying recognizing request (RReq1, RReq2) or
- delaying the delivering of a result and aggregating partial results (RRes1, RRes2) in response to said requesting.

3. The method according to claim 1, **characterized in that** the requesting is triggered by a stroke.

4. The method according to claim 1, **characterized in that** the requesting recognizing the digital ink part by part is realized by a markup language extension (Figure 5, 6).

5. The method according to claim 1, **characterized in that** recognition functionality (REC1, REC2, ST1, ST2) is transferred from client (C) to server (S) and vice versa using a markup language extension enabling exchanging functional parts and resources of the handwriting recognizer unit and capturing device (HWSC+, HWRE+).

6. A distributed handwriting recognizer system comprising at least one handwriting recognizer client (C) and a handwriting recognizer server (S) connected via a network,
- said handwriting recognizer client (C) comprises input means (HWUI) for capturing handwriting input, processing means for translating the input into digital ink (HWSC+) at the client (C) terminal, and communication means (COM+) for delivering the digital ink from the client (C) to the server (S),
- said handwriting recognizer server (S) comprises a recognizer unit (HWRE+) for recognizing the digital ink at the server (S), and communication means for delivering the recognition result (RRes1, RRes2) to the client (C),
**characterized in that** the communication means (COM+) are formed to establish a recognizing session and configuring a context of said handwriting recognizer unit (HWRE+) by an instruction in the digital ink (HWPRP) exchanged via said network, and the communication means are formed to handle a sequence of partial recognizing requests (RReq1, RReq2) and to reply with the delivering of a sequence of partial recognition results (RRes1, RRes2) until the digital ink is recognized or the process is interrupted.

7. A handwriting recognizer client (C) in a distributed handwriting recognizer according to claim 6.

8. The handwriting recognizer client (C) according to claim 7, **characterized in that** it is embedded within a browser environment.

9. A handwriting recognizer server (S) in a distributed handwriting recognizer according to claim 6.

10. The handwriting recognizer server (S) according to claim 9, **characterized in that** it is provided as a web service.

11. A computer software product for recognizing handwriting at a client (C) involving a handwriting recognizer at a server (S), **which** upon execution performs the method according to claim 1.
